# EUROPEAN PATENT SPECIFICATION

(11) **EP 3 242 862 B1**
(45) Date of publication and mention of the grant of the patent: **09.06.2021**
(21) Application number: 16700025.6
(22) Date of filing: 05.01.2016
(51) Int. Cl.: C04B 35/111, C04B 35/14, C04B 35/46, C04B 35/486, C04B 35/565, C04B 35/624, C04B 38/00

(54) **APPARATUS AND METHODS**
VORRICHTUNG UND VERFAHREN
APPAREIL ET PROCÉDÉS

(30) Priority: 06.01.2015 GB 201500121
(43) Date of publication of application: 15.11.2017
(73) Proprietor: Smart Separations Limited, London EC1V 4PW (GB)
(72) Inventor: MACEDO, Hugo Miguel Magalhaes, London SW11 3NQ (GB); DRINKWATER, Richard, Sevenoaks Kent TN15 7LH (GB)
(74) Representative: Pinney, Matthew David
(86) International application number: PCT/GB2016/050011
(87) International publication number: WO 2016/110687

(56) References cited:
- EP-A2- 0 827 808
- WO-A1-99/30795
- WO-A1-2006/049269
- WO-A2-2008/041969
- WO-A2-2008/060324
- WO-A2-2015/004468
- GB-A- 2 219 221
- JP-A- 2006 128 582
- US-A1- 2006 105 141
- US-A1- 2009 110 877
- US-A1- 2014 030 957
- US-A1- 2014 101 925

## Description

### FIELD OF THE INVENTION

This invention relates to apparatus and methods for manufacturing ceramic filters.

### BACKGROUND TO THE INVENTION

It is known to fabricate filters from thin plastic films using track-etch techniques, bombarding the films with charged particles and subsequently performing a chemical etch. Another technique uses a laser beam to drill pores in a polymeric membrane. A third approach is to employ lithography. However these filters tend to be weak, expensive and unsuitable for many applications.

In principle ceramic materials should be advantageous for microfiltration, but there is no easy technique for producing on-demand defined circular pore sizes.

Background prior art can be found in:

| |
|---|
| US6479099B |
| US5340779A |
| EP1020276A |
| US2004091709A |
| US2002074282A |
| WO03072233A |
| US2007142208A |
| US2011100910A |
| US2008022644A |
| US2007119135A |
| US4746341A |
| US2006192326A |
| KR100445768B |
| JP2009227555A |

Further background prior art can be found in: "Preparation, Characterization And Permeation Property Of Al2O3, Al2O3-SiO2 And Al2O3-Kaolin Hollow Fiber Membranes", Han Et Al. Journal Of Membrane Science, Volume 372, Issues 1-2, 15 April 2011, Pages 154-164; and in "Optimization Of Hybrid Hyperbranched Polymer/Ceramic Filters For The Efficient Absorption Of Polyaromatic Hydrocarbons From Water", Tsetsekou A. Et Al. Journal Of Membrane Science, Volume 311, Issues 1-2, 20 March 2008, Pages 128-135.

Further relevant prior art includes EP0827808, JP2006/128582, US2014/030957, US2014/101925 and WO2006/049269.

### SUMMARY OF THE INVENTION

### Ceramic filters

We have previously described (in WO2015/004468, unpublished at the priority date of the present application), a method of manufacturing a ceramic filter having a controlled filter channel opening size, the method comprising: fabricating a ceramic precursor element, said precursor element having a structure comprising first and second surfaces and an arrangement of flared pores extending between said first and second surfaces, wherein an apex of a said flared pore is towards said first surface and a base of said flared pore is towards said second surface and is larger than said apex, wherein said flared pore contains polymer material and regions between said flared pores comprise ceramic material; and sintering said ceramic precursor element to fuse said ceramic material and remove said polymer material; the method further comprising removing a controlled thickness portion of said first surface to open said flared pores to said controlled filter channel opening size.

In embodiments the ceramic precursor element is fabricated by forming a dope into a desired shape for the element, the dope comprising the ceramic material, the polymer, and a solvent for the polymer. The formed shape is then treated in a bath of liquid in which the solvent (but not the polymer) is miscible. For example a polar solvent in combination with an aqueous (water) bath may be employed. Broadly speaking during treatment the solvent is replaced by the liquid (water) in the bath in a manner which forms convection cells leaving a substantially regular arrangement of generally conical pores extending between the surfaces of the precursor element. In principle inorganic materials other than ceramic materials may be employed. The apexes of the flared pores do not quite reach the first surface, although in embodiments they may just intersect this surface leaving very small apertures, for example less than 0.1µm, if the element comprises a very thin membrane. During firing the polymer material is burnt off leaving flared apertures in the sintered ceramic. Then by removing a controlled thickness layer of material from the first surface the flared pores can be opened to a desired extent.

The precursor element may, in embodiments, comprise a thin sheet or membrane of material, or a tube of material. A portion of the first surface may be removed by depositing a solvent onto this surface, preferably of the same class (polar or non-polar) as that in the ceramic precursor and leaving the solvent to dissolve a thin layer of the first surface, optionally aided by shaking. For example solvent may be poured onto the top of a membrane or a tubal fibre may be dipped into a solvent. The solvent is left for a period of, for example, of order 1 minute to of order 24 hours, the dissolution process being halted by placing the ceramic precursor into an oven for sintering.

Additionally or alternatively a portion of the first surface of the ceramic precursor element may be removed physically, for example by means of a controlled height cutter such as a knife blade on an adjustable lead screw - such an arrangement can typically control the thickness of material removed to better than 1µm. This process may be performed dry or with lubricant, before sintering. After sintering material may be removed by abrasion, for example using a controllable height spinning abrading disc such as a diamond polisher, or by employing a sandpaper-like abrasion process employing ceramic particles of a similar material to the ceramic material in the filter - for example micron scale or sub-micron scale aluminium oxide particles, diamond, and/or silicon oxide. In another approach, fibre optic lapping film may be used to abrade the surface; this may employ a variety of materials, such as silicon oxide, diamond, aluminium oxide, titanium dioxide, and so forth.

We also described a ceramic filter having a structure comprising first and second surfaces and an arrangement of flared passageways extending between and connecting with said first and second surfaces.

In embodiments the conical pores in the ceramic precursor are all substantially the same size and have substantially the same included angle at the apex. Thus by removing material from the first surface the size of the pores can be accurately controlled - although in practice embodiments of the technique we describe tend to place an upper limit on the maximum dimension (diameter) of the opening of a pore - which is a useful property for a filter.

Embodiments of the filter structure have flared passageways, which is useful in reducing the risk of obstruction/blocking. Typical filter pore diameters are in the range 0.1-20µm, although larger pores may be fabricated (limited by the size of the pore at the second surface, which depends on the thickness of the element). Thus in embodiments of a filter fabricated by the process the flared passages are generally circular and more than 90% have a diameter (at one or both ends) of greater than 0.1µm, 0.2µm, 0.5µm or 1µm. In embodiments the opening of the passages may have a diameter (at one or both ends) of less than 100µm, 50µm, 30µm, 20µm, 10µm, 5µm or 2µm. This is useful as such pore sizes are difficult to produce reliably by other techniques.

One advantageous application of a filter manufactured by the above described technique is in separating components of blood, in particular separating red blood cells from other blood components. For example platelets may have a diameter of less than 1µm, red blood cells may have a dimension of around 7µm, and white blood cells, and other cells in the blood such as stem cells, may have a dimension in the range of 10-20µm. Thus by selecting a pore size of less than 5µm, 4µm, 3µm or 2µm (a red blood cell may squeeze through a hole as small as 1-3µm) a leukoreduction filter may be fabricated. Conventional blood filtration apparatus can lose of order 5-10% of red blood cells in the filtration process, but blood filtration apparatus incorporating ceramic filter of the type we have described can be substantially more efficient. In addition the quality of the residue is enhanced and the residue may be recovered to extract material such as stem cells or white blood cells, for example for research.

Although embodiments of the techniques we have described are particularly useful for fabricating filters with a controlled pore dimension, they may more generally be employed for fabricating a ceramic filter element without necessarily controlling the pore dimension and, potentially, employing other inorganic materials than ceramic materials.

Thus we also described a method of manufacturing an inorganic filter, the method comprising: fabricating a precursor element, said precursor element having a structure comprising first and second surfaces and an arrangement of flared pores extending between said first and second surfaces, wherein an apex of a said flared pore is towards said first surface and a base of said flared pore is towards said second surface and is larger than said apex, wherein said flared pore contains polymer material and regions between said flared pores comprise inorganic material; and sintering said precursor element to fuse said inorganic material and remove said polymer material; the method further comprising removing a portion of said first surface to open said flared pores.

The previously described techniques may all be employed in embodiments of this aspect of the invention. In particular a portion of the first surface may be removed physically and/or chemically prior to sintering and/or after sintering, in particular using the previously described techniques. Filters manufactured in this manner may likewise be used in, for example, blood filtering apparatus or cell separation in general.

In typical embodiments of the fabrication process a thin (e.g. 2-3µm) skin is left over the second surface. Where present this can be removed, before or after sintering, by processes as described above to fabricate the filter structure. Alternatively it may be left in place to enable the fabrication of a set of flared wells of controllable aperture.

Thus we also described a ceramic plate having a structure comprising first and second surfaces and an arrangement of flared passageways extending between and connecting with one of said first and second surfaces to define a set of flared wells. There is further provided a method of manufacturing such a plate.

In principle the filter structure may have applications other than filtering. For example one or both surfaces may be patterned, for example by selective abrasion, and the patterned structure may be used to as a mask for visible or non-visible light. Such selective abrasion may be performed, for example, by a CNC router. A mask of this type may be used, for example, to display a logo or potentially, with a smaller scale pattern, as a mask to photolithography.

Thus we further described a method of manufacturing a ceramic plate having a controlled channel opening size, more particularly a method of manufacturing a mask, the method comprising: fabricating a ceramic precursor element, said precursor element having a structure comprising first and second surfaces and an arrangement of flared pores extending between said first and second surfaces, wherein an apex of a said flared pore is towards said first surface and a base of said flared pore is towards said second surface and is larger than said apex, wherein said flared pore contains polymer material and regions between said flared pores comprise ceramic material; and sintering said ceramic precursor element to fuse said ceramic material and remove said polymer material; the method further comprising removing a controlled thickness portion of said first surface to open said flared pores to said controlled channel opening size.

We also described a plate/mask structure comprising first and second surfaces and an arrangement of flared passageways extending between and connecting with said first and second surfaces, optionally wherein the arrangement of flared passageways of the plate/mask structure is patterned.

In embodiments of the above described manufacturing methods/filters/plates/structures a surface of the filter may be treated to modify a physical, chemical or biological characteristic of the surface, in particular to provide the filter with a surface coating. For example the surface may be plasma treated, say to render the surface hydrophilic or hydrophobic, and/or the surface may be treated with a molecular material to functionalise the surface. In embodiments a surface of the filter is coated to modify the filtration characteristics, in particular to more effectively select or filter out one or more targets.

We also described a method of filtering particles from a fluid (liquid or gas) using a filter as described above/as manufactured by an above-described method.

### Ceramic filter fabrication apparatus and methods

It is desirable to be able to automate the manufacture of filters according to the techniques that we have previously described.

According to the present invention there is therefore provided an apparatus for controlling the filter channel opening size of a ceramic filter element, said ceramic filter element having flared pores, the apparatus being defined in claim 1 and comprising among other features: a lapping machine having a lapping plate; and a filter holder to hold a ceramic filter element for controlled lapping of said flared pores; wherein said filter holder comprises: a filter element mount to mount a filter element to be lapped such that a surface of said filter element lies substantially flush with a lower face of said filter holder; an adjustable actuator to controllably move said surface of said filter element so that it remains substantially flush or projects beyond said lower face of said filter holder during lapping; and means for urging said filter holder towards said lapping plate.

Embodiments of the apparatus provide the ability to hold a thin disc of hard ceramic in such a way that a very thin, but controllable thickness surface layer can be lapped (abraded). The filter element mount comprises an adjustable piston controlled by the actuator, which may comprise a micrometer screw thread. Preferably a seal is included between the piston and the filter holder. In embodiments the lower face of the filter holder includes a ceramic portion (wear portion) extending around a perimeter of the filter element, when the filter element is mounted.

In embodiments the means for urging the filter holder towards the lapping plate comprises one or more weights mounted on the filter holder. In preferred embodiments movement control means is provided, for example in the form of a stop for the actuator, to control a degree of abrasion of the filter element to control an opening size of the flared pores.

A filter element may be ground and measured to establish average channel opening size, in particular to achieve a desired average (mean, median or mode) filter channel opening at the narrow end of a flared channel where it opens onto the surface of the filter element. (The filter channel opening size described is also referred to herein as pore size). The average filter channel opening size may be determined by measuring the maximum or minimum lateral dimension across the openings of a plurality of channels and taking the mean, median or mode of these measurements.

In embodiments the apparatus may include an associated computer system to output a target filter thickness or abrasion length (amount of material to abrade) given a target average channel opening size to be achieved. This computer system may comprise, for example, a suitably programmed, dedicated or general purpose computer with one or more user and/or machine interfaces. In embodiments the computer system may comprise a programmable logic controller (PLC). The computer system may implement a model relating filter thickness I or a change in filter thickness (abraded distance) Δ*l* to average channel opening size *d* or to a change in channel opening size Δ*d.* This model may be determined by calibration (the computer system then storing calibration data defining a relationship established between *d* or Δ*d* and I or Δ*l*), or a mathematical model linking *d* or Δ*d* and I or Δ*l* may be used, as described later. Optionally such a computer system may include a control system to control the abrasion of the filter element, in particular to achieve a desired average (mean, median or mode) filter channel opening at the narrow end of a flared channel where it opens onto the surface of the filter element. The control system may receive an input defining (measuring) a thickness of the filter plate and/or a degree of abrasion of the filter plate. This measurement may be made automatically, by the apparatus, or may be manually input. The control system may provide a control output for controlling the apparatus, for example an indicator such as a visual or audible warning to cease abrasion, or a control signal to control (stop) the lapping machine.

According to the invention, the apparatus further comprises a system controller to sense or measure one or more parameters of the apparatus when used to abrade the filter element, in particular one or more of: a pressure of the filter element on the lapping plate, a rotational speed of the lapping plate, and a duration of lapping of the filter element. The system controller may then control one or more of these parameters to control the filter channel opening size. In embodiments, therefore, the system controller includes a stored model relating the one or more sensed parameters to the filter channel opening size. As previously described such a stored model may comprise a mathematical model and/or an empirical model.

The invention further provides a method as defined in claim 9 of manufacturing a ceramic filter using apparatus as described above to controllably remove a portion of the thickness of a surface of a ceramic filter element having flared pores opening onto the surface to thereby control a channel opening size of the manufactured ceramic filter.

It will be appreciated that when employing apparatus of the type described above it is important that the ceramic filter element is substantially flat. However because of the presence of flared pores in the ceramic precursor element, when this element is sintered it tends to warp because of the stresses involved. More particularly the surface with the wide pore ends tends to stretch more than the surface with the small pore ends, so that the ceramic precursor element becomes convex on the surface on which the large pore ends terminate and concave on the surface on which the small pore ends terminate. If the ceramic precursor element is laid flat, with the large pore ends on the bottom surface, the edges of the ceramic precursor element tend to bend upwards during sintering.

In some preferred embodiments of the method, therefore, a force is applied to the ceramic precursor element during sintering, with a component in a direction from the apex towards the base of the flared pores.

When used with grinding/lapping apparatus as described above this technique can be employed to maintain the ceramic precursor element substantially flat during sintering. However applications of this technique are not limited to use with apparatus as described above.

Therefore in a related aspect the invention provides a method of manufacturing a ceramic filter having a controlled filter channel opening size, the method comprising: sintering a ceramic precursor element, said precursor element having a structure comprising first and second surfaces and an arrangement of flared pores extending between said first and second surfaces, wherein an apex of a said flared pore is towards said first surface and a base of said flared pore is towards said second surface and is larger than said apex, wherein said sintering comprises applying a force to said ceramic precursor element during said sintering, wherein said force has a component in a direction from said apex towards said base of said flared pore; and fabricating said ceramic filter by removing a controlled thickness portion of said flat surface to open said flared pores to said controlled filter channel opening size.

One difficulty with this technique is that typically the sintering temperature is high, for example around 1400-1450°C (the temperature at which aluminium oxide begins to fuse). If a force is to be applied by, for example, a flat plate then this should be of a material which is still sufficiently stiff at the sintering temperature that the ceramic precursor element remains substantially flat during sintering. In practice it has been found that this can be achieved by using a ceramic material such as aluminium neosilicate, forming the material into a brick so that the weight of the material applies the force keeping the ceramic precursor element flat during sintering. In principle sufficient force can be applied in this way by stacking a number of ceramic precursor elements on top of one another, but in other approaches an 'andalusite brick' is employed. The ceramic precursor elements may rest on the base of the sintering furnace which may be, for example, a flat base of alumina.

Although embodiments of the above described techniques are particularly useful in providing flat ceramic filter elements, in principle similar techniques may be employed to form ceramic filter elements of other shapes. Thus in other applications fabricating a ceramic filter element may include shaping the ceramic filter element by applying force to sandwich the ceramic precursor element within a former defining the desired, target shape. Again the former may be constructed of a suitable refractory material, such as a ceramic material.

Preferred embodiments of the ceramic filter element manufacture use the techniques described above under the heading 'ceramic filters'. In particular the ceramic precursor element is preferably fabricated by forming a dope comprising the ceramic material, a polymer, and a solvent for the polymer. This dope may then be formed into the desired shape for the ceramic precursor. Typically the dope comprises a viscous liquid and it may therefore be formed by casting into the desired shape, which may be a flat slab. The formed shape may then be treated in a bath of liquid, such as water, to at least partially replace the solvent with the liquid of the bath. It has been found that the quality of the ceramic precursor element, and hence of the manufactured ceramic filter, can be improved by degassing the dope preferably (but not essentially) prior to forming (typically casting) the dope into the desired shape. Such degassing may be performed, for example, in a vacuum chamber or by centrifugation. This procedure tends to reduce the number of minute air bubbles, thus increasing the integrity of the filter element and improving the manufacture of a defect-free filter.

As described above, in preferred embodiments the ceramic precursor element is sintered prior to grinding/lapping. However in principle the grinding/lapping may be performed prior to sintering, although this is generally less preferable as unless performed carefully the pores tend to deform.

### BRIEF DESCRIPTION OF THE DRAWINGS

These and other aspects of the invention will now be further described, by way of example only, with reference to the accompanying figures in which:
Figures 1a and 1b show, schematically, a principle of pore size control in a method of manufacturing a ceramic filter according to an embodiment of the invention, and schematic views from the top and bottom of an embodiment of a filter manufactured in this way;
Figures 2a and 2b show, respectively fabrication of a fibre precursor element and fabrication of a membrane/wafer precursor element;
Figure 3 shows, schematically, a vertical cross-section through a water bath-treated membrane precursor element;
Figure 4 illustrates an example of a controlled height cutter which may be employed for removing a layer from the ceramic precursor element;
Figure 5 illustrates a circular ceramic element, and use of a diamond polisher to abrade a sintered ceramic element;
Figure 6 illustrates, schematically, blood filtering using a ceramic filter;
Figure 7 shows a range of particle separations of embodiments of membrane filters according to the present disclosure (labelled "microfiltration"), alongside other separation principles for different particle sizes;
Figure 8 shows an image of a top view of a described ceramic filter under the microscope (magnification of 100x), and a schematic illustration of a diagonal cut across the top of the filter that was employed to provide pores with different opening dimensions along the length of the membrane surface shown;

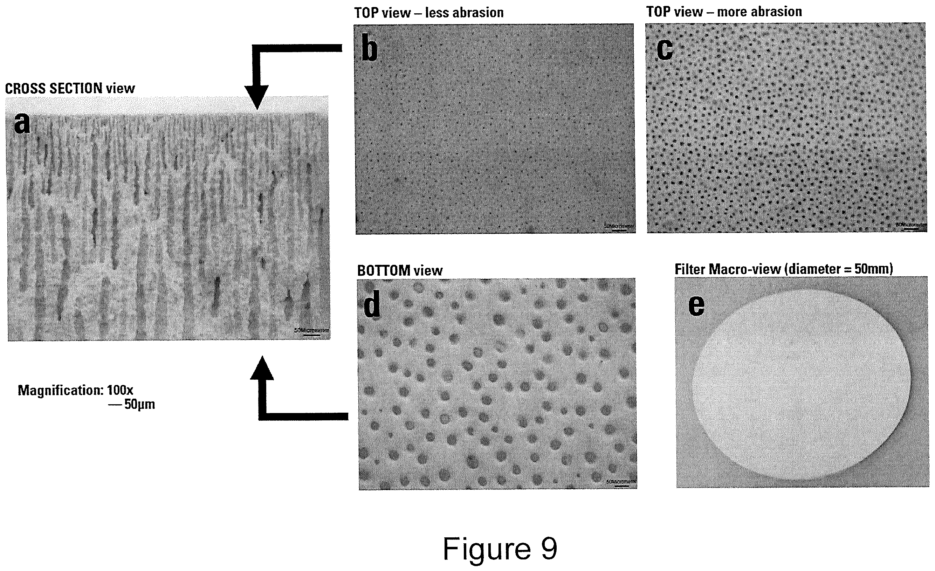

Figure 9 shows a set of images of functional filters manufactured using a method according to an embodiment of the invention, showing: 9a) a cross-sectional view of a membrane (microscope magnification of 100x); 9b) a top view of a membrane after abrasion of the top surface (microscope magnification of 100x); 9c) a top view of the membrane in figure 9b after further abrasion of the top surface (microscope magnification of 100x); 9d) a bottom view of a membrane after abrasion of the bottom surface (microscope magnification of 100x); and 9e) a perspective view of the top of a membrane filter as prepared according to the described method (disc diameter 50mm);
Figures 10a and 10b show cross-sections through apparatus for controlling the filter channel opening size of a ceramic filter element according to embodiments of the invention; and
Figures 11a and 11b show an enlargement of a ceramic disc region of Figure 10 illustrating, in Figure 11a, a disc which fits the filter holder and in Figure 11b a disc holder for a reduced sized disc.

### DETAILED DESCRIPTION OF PREFERRED EMBODIMENTS

### Ceramic filters

Techniques to produce ceramic materials out of sol-gel casting include making a dope solution, composed of a binder (or dispersant), a solvent wherein said binder is soluble and a ceramic material in crystal form (such as, but not limited to, aluminium oxide, zirconia oxide, and the like). If dipped into a non-solvent such as water these can produce highly organised internal pores. We modified such structures for the microfiltration of particles in the micrometer range (0.1µm - 100µm). Advantages of the filters include robustness due to the stable materials used, low price, and a simple manufacturing process. Applications include treatment of fermentation broths and solvent extracts, processing of alginates, pyrogen and bacteria removal, production of antibiotics and others, for example in situations where high temperatures and/or high pressures and/or acidic or basic conditions are present. We will also describe their use for blood filtration. In particular we will describe techniques for producing on-demand pore sizes on the membrane, to allow it to be tailored for a particular microfiltration application.

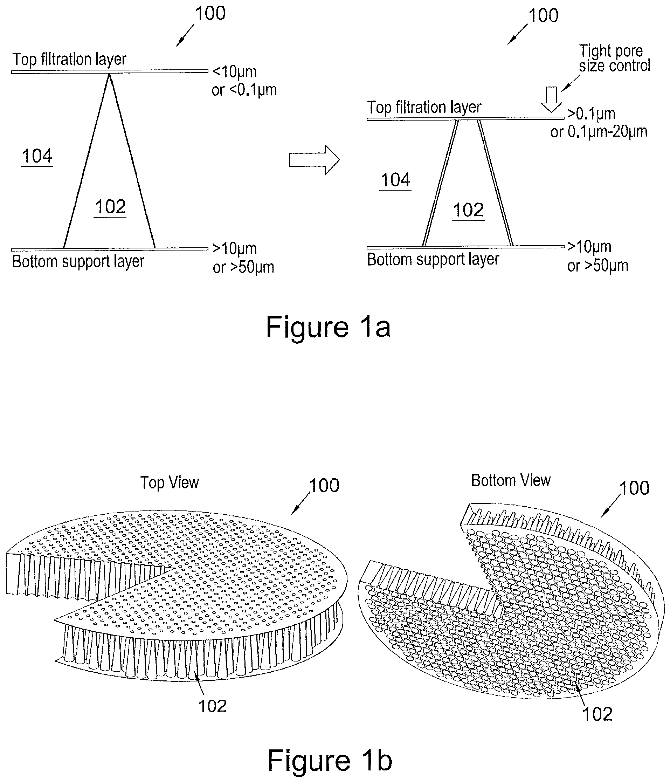

The ceramic membrane filters 100 that are obtained by embodiments of the techniques we describe are composed of conical shaped pores 102, as illustrated in figure 1, that cross through these membranes 104, top to bottom. With this pore geometry the production of membranes 104 of different pore size distributions can be achieved by producing membranes 104 in large batches (which reduces the manufacturing costs), afterwards tailoring the pores 102 for an intended application - i.e. with variable pore sizes. Such a method allows a reduction in the time and cost requirements to develop a tailor-made filter - by changing e.g. the dope solution ratios, the type of non-solvent, the temperature of the sintering process, the drying time of the membrane film 104, the thickness of the filter 100 and so forth, one can change the pore angle/packing density and other filter parameters.

Thus we describe the manufacture of tailor-made pore sizes in ceramic filters 100, allowing their use in a wide range of applications in the field of microfiltration, particularly in filtration of cells.

Initially a dope solution is prepared with a mixture of a solvent, a ceramic-based material, and a polymer.

The solvent may be, but is not limited to: dimethylformamide, dimethylsulfoxide, dimethylformamide, dimethylacetamide, N-methyl-2-pyrrolidone, hexamethylphosphoramide, dioxane, others derived therefrom or other organic solvents available that can dissolve the polymer.

The ceramic-based material may be, but is not limited to: aluminum oxide, titanium oxide, zirconium oxide, silicon carbide, glassy materials, or any other similar materials, optionally surface-treated with cross-linking agents.

The polymer material may be, but is not limited to: polyamide, poly (caprolactone), polyurethane, poly (L-lactic-co-glycolic acid), polyacrylonitrile, polyimide, poly (methylmethacrylate), poly (D, L-lactate), polystyrene, polyether ether ketone, polyethersulphone, polyvinylidene fluoride, polysulfone, polyethersulfone or any other similar material, preferably surface-treated with cross-linking agents. The polymer acts as a water-insoluble binder in the dope; it should be burnt away at sintering temperatures (600-1500°C).

Optionally a dispersing agent/surfactant can be added to the mixture. The dispersing agent may be, but is not limited to: alkylbenzenesulfonates, lignin sulfonates, fatty alcoholethoxylates, alkylphenol ethoxylates, PEG 30 dipolyhydroxystearate, sodium stearate, 4-(5-Dodecyl) benzenesulfonate, sodium dodecyl sulphate, cetrimonium bromide, fluorosurfactants, siloxane surfactants, alkyl ethers, block copolymers of polyethylene glycol and polypropylene glycol, others derived therein, and/or any other amphiphilic compound.

In an example embodiment the solvent is dimethylsulfoxide, the ceramic is aluminum oxide, the polymer is polyethersulphone, and the dispersing agent is PEG 30 dipolyhydroxystearate.

The dope solution is then degassed using a vacuum chamber and casted to a smooth surface, using a casting knife or other method to control the thickness of the casted coating. The shape of the cast dope solution may hereby be adjusted according to the desired shape of the ceramic precursor element to be fabricated. The cast dope solution is then immediately transferred into a water bath and left standing there for a period longer than 5 minutes, typically overnight, to set. During this process the solvent is gradually replaced by the water, surface tension effects at the surface, and convection, resulting in the development of a substantially regular pattern of conical polymer-containing regions. The polymer and/or the polymer/ceramic material mixture are not substantially dissolved in the water bath. The film is then removed from water and allowed to dry for a period longer than 5 minutes, e.g. 24 hours.

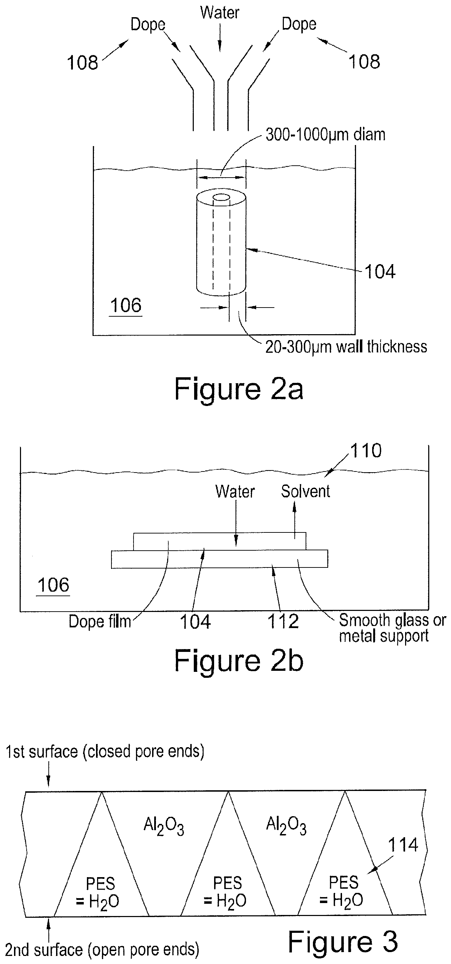

Figure 2a illustrates a tubular precursor membrane 104 in a water bath 106; Figure 2b illustrates a process of forming a tubular precursor element 104. Figure 3 illustrates a cross-section of the membrane 104 of Figures 2a and b after treatment in the water bath - the PES is burnt away during sintering. Typically the membrane may be of order of 50µm (Figure 2a) and 500µm (Figure 2b) thickness.

In more detail, as shown in Figure 2a, the dope solution 108 which comprises the ceramic-based material, the polymer and the solvent is placed into a water bath 106. In this example, the precursor element 104 has a tubular shape with a diameter of 300 - 1000 µm and a wall thickness of 20 - 30 µm. It will be appreciated that the precursor element 104 may be of any shape, which may be determined by the particular use of the ceramic membrane filter 100.

Figure 2b shows an example in which the precursor element 104 has a tabular shape. The precursor element 104 may be prepared on a smooth metal layer 112 which allows for a smooth precursor element 104 to be formed thereon. As illustrated in Figure 2b, the metal layer 112 may be replaced with a smooth glass or other suitable support which allows for preparing a smooth precursor element 104.

It can be seen that when the precursor element 104 is placed into the water bath 106, water penetrates into the precursor element 104 and replaces the solvent 110 which is released into the water bath 106. As outlined above, the precursor element 104 may be placed in the water bath 106 for a period longer than 5 minutes.

Figure 3 shows a cross-sectional view of the precursor element 104 prepared as illustrated in Figure 2b. It can be seen that in the area where pores 102 are to be fabricated, a mixture 114 of water and the polymer is formed.

In order to remove the water/polymer mixture 114 from the precursor element 104, the film is first removed from the water bath 106 and then left to dry for a pre-determined amount of time. Afterwards, the polymer may be burnt away by sintering at a pre-determined temperature, in this example between 600 - 1500 °C.

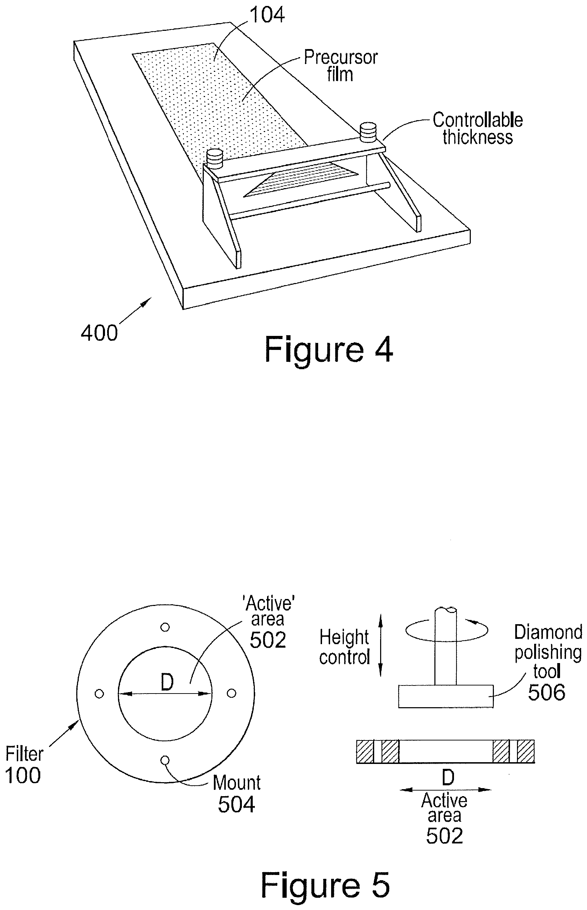

After forming the precursor element 104, a tool 400, such as a casting knife or other similar device (Figure 4), is used to remove the top layer of the membrane film 104, by scrapping the surface and removing a thickness between 0µm and the final thickness of the film 104. The thickness of the layer of the film 104 to be scraped off is controllable by the tool 400 used for scrapping. This procedure can also be accomplished by pouring a solvent (from the list described above) on top of the membrane film and allow it to stand on top of the membrane film for a period, typically longer than 1 second, or shaking it to accelerate the process, scrapping the surface of the membrane to clean using the same method described above and immediately proceeding to sintering of the film.

The film is then cut into the desired shape of the filter, for example a circle, as shown in Figure 5. This may be done using a circular knife. The membrane is then sintered, for example at a temperature above 600 degrees Celsius for a period of the order of two hours, followed by at least 1 hour (for example 3-4 hours) at 1200-1600 degrees Celsius. Afterwards, the membrane filter is optionally further processed by abrading the surface of the membrane, to render its pores larger according to the time, pressure and abrading material used. Figure 5 shows polishing of the central, active region 502 of a filter 100, held in place by mounts 504 at the edge. In this example, a diamond polishing tool 506 is placed on the top of the central, active region 502 of the filter 100. The diamond polishing tool 506 has the shape of a circular disc, and is rotated around its own axis as illustrated to abrade the surface of the filter 100 in the active region 502. The skilled person will appreciate that the pressure exerted onto the active region 502 via tool 506, the roughness and abrasiveness of the diamond polishing tool 506, the spinning speed, and other parameters may determine the abrading rate. It will be appreciated that the diamond polisher may be replaced with another suitable material for abrading the active region 502. The diamond polishing tool 506 may be controllable in a vertical direction as shown in Figure 5 in order to define the amount of material on the active region 502 to be abraded.

Thus, two main options are available to control the pore sizes: process 1) after casting of the membrane film 104 and before sintering of the film 104; and process 2) after sintering of the film 104, having attained the ceramic filter 100. Both processes can be undertaken either alone or combined, in order to give a filter 100 a desired pore size specification.

Process 1, before sintering, may be achieved by removing a top layer of the cast membrane 104, removing a thickness of between 0µm and the final thickness of the dried film 104, before or after drying. This may be performed by placing a solvent on top of the membrane 104, allowing it to rest there for a period, typically longer than 1 second, or shaking it to accelerate the process, then scrapping the surface of the membrane 104 to clean using a tool 400, such as a casting knife or other similar and then evaporating the solvent by immediately transferring the film 104 into a hot oven.

The longer the exposure of the membrane 104 to the solvent, the larger the pores 102 produced. Another method which can be used in process 1 is to use a tool 400, such as a casting knife or other similar, to remove the top layer of the membrane (the thicker the gap of the tool 400 used, the smaller the pore sizes in the resulting filter 100), or by using a soft tool to gently scrap the surface of the film 104 (depending on the strength and/or the time during which this is done will produce membranes 104 with controllable pore sizes).

Process 2, which may be used in addition to process 1 or on its own, is performed after sintering and can achieve better tuneable control of the pore sizes. This is achieved by abrading the surface of the membrane 104, to render its pores 102 larger depending on the time, pressure and abrading material used (e.g. "sandpaper" or a diamond tool).

Using this method, the pore size at the surface of the membrane 104 can be tightly controlled, depending on the process(es) used, the perpendicular force exerted over the membrane film 104, and the material(s) used. This facilitates a one-step universal manufacture process of a base comprising a ceramic membrane disc, which can then be tailored for different applications, following process(es) 1 and/or 2.

As it can be seen from figure 1, in a pore 102 with conical geometry seen transversally and in 2 dimensions, by changing the amount of abrasion at the smaller-pore size end it is possible to create pores 102 with a controlled, variable size.

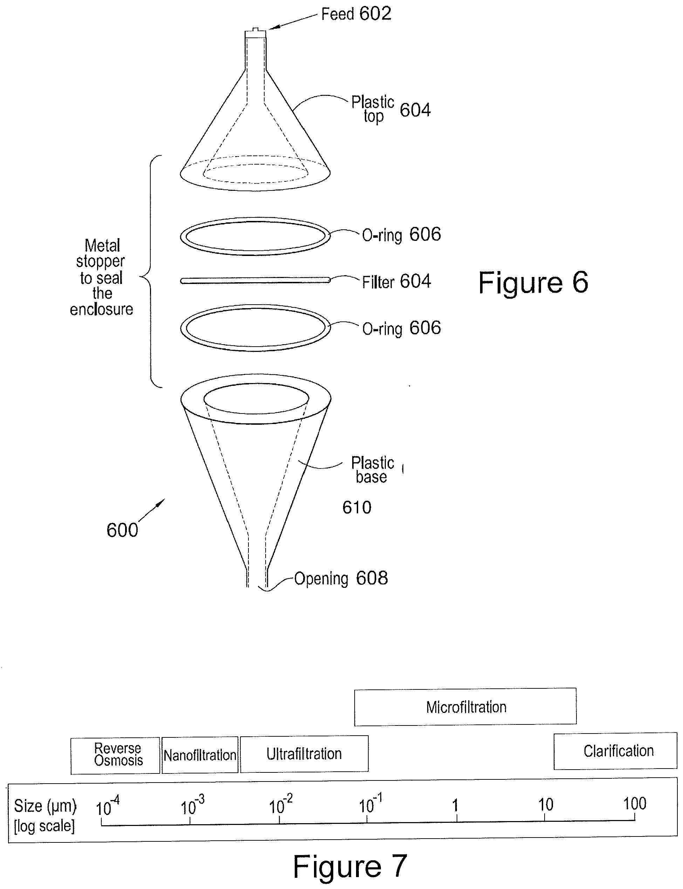

Filters 100 fabricated by these techniques are useful for membrane filtration for the industrial separation of blood cells to eliminate leukocytes (to reduce the risk of infection). Membrane filtration is simple and inexpensive and it is easy to maintain sterility during the process. An example schematic illustration of such blood filtering apparatus 600 is shown in Figure 6.

As shown in Figure 6, the filter 100 is sandwiched between a plastic top 604 and a plastic base 610. Two seals (O-rings) 606 are provided, between the filter 100 and the plastic top 604 and plastic base 610, respectively. The plastic top 604 comprises a feed 602 through which the material to be filtered by filter 100 may be inserted into apparatus 600. The plastic base 610 comprises an opening 608 through which the filtered material may then be collected. The assembly may be held together by a metal strap.

Figure 7 shows a range of particle separations of embodiments of membrane filters. It can be seen that a range of filters comprising pores with a broad range of sizes (in this example ∼0.1 µm to a few tens of µm) may be fabricated using techniques described herein. It will be understood that the size of the pores may be determined by the size of the specific material(s) to be filtered.

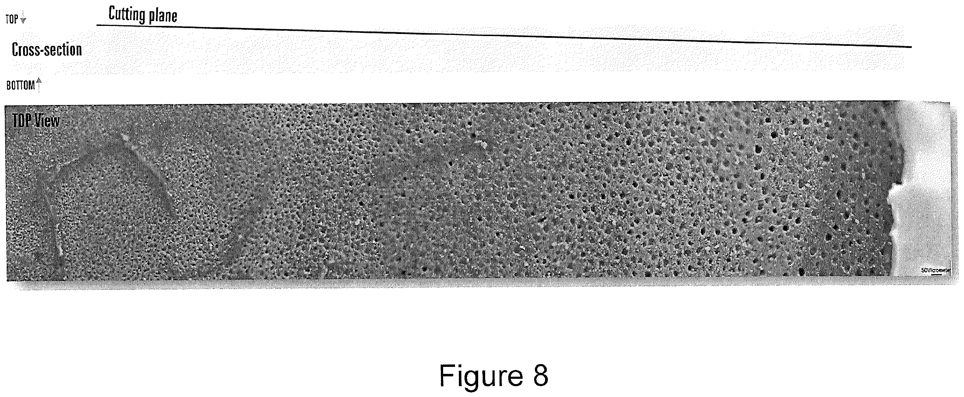

Figure 8 shows a top-view of a ceramic filter prepared using techniques as described herein. As illustrated in the schematic cross-sectional view, the filter is cut such that the cut is deeper towards the right-hand side of the filter. As can be seen, the depth of the cut determines the opening size of the pores.

Figure 9a shows a cross-sectional view of the filter. It can be seen that the diameter of the pores increases towards the bottom of the membrane filter. Figures 9b and c show top-views of the filter illustrated in Figure 9a. As already illustrated in Figure 8, the diameter of the opening of the pores at the top surface of the filter is determined by the depth of abrasion of the top surface of the membrane. Figure 9d shows a bottom-view of the filter. The opening of the pores is larger in diameter as described above.

Figure 9e shows a perspective view of the top of a membrane filter with a diameter of, in this example, 50 mm. As described above, the shape of the membrane filter may be adjusted according to the specific implementation of the filter.

More generally ceramic filters are useful in harsh environmental conditions (chemical/thermal/pH), and also when high pressures are required during the separation process or afterwards (for example for regenerating a membrane).

Such harsh conditions are not generally present when filtering human cells but the high strength of ceramic filters confers an important advantage in this application by facilitating the creation of a more densely packed pore structure. This in turn helps to maintain the shape and viability of filtered cells by reducing the stresses arising from the passage of the cells through the filter.

### Ceramic filter fabrication apparatus and methods

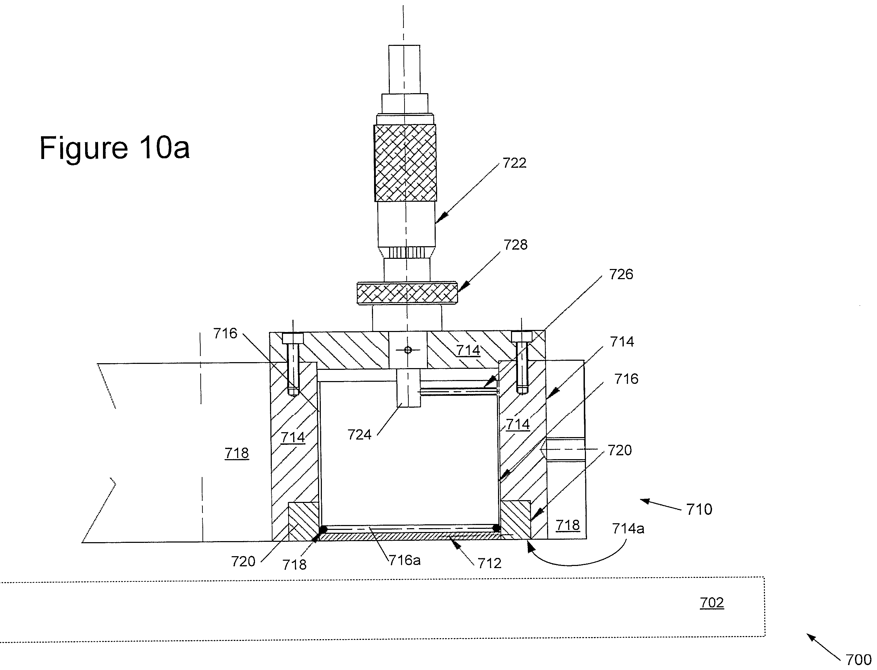

Referring now to Figure 10a, this shows a cross-sectional view of an embodiment of apparatus 700 for controlling the filter channel opening size of a ceramic filter element as previously described. The apparatus comprises a lapping machine (not shown) including a lapping plate 702, shown dashed, on top of which sits a filter holder 710 to hold a ceramic filter element 712 as previously described. In some preferred applications the ceramic disc 712 is lapped (ground) after sintering, but in principle the apparatus may also be employed to lap the precursor filter element prior to sintering, although in this case a much less aggressive abrasive agent should be employed.

The filter holder 710 comprises a filter element mount (or housing) 714, for example of stainless steel, housing a piston 716, for example of hard steel, having a flat face 716a against which the ceramic disc 712 bears. A seal 718, for example an 'O' ring, is preferably included between the piston and housing/mount to resist the ingress of abrasive grit and the like from the lapping process.

In some preferred embodiments the filter holder includes a mounting 718 for one or more weights to provide a downward force to urge the ceramic disc 712 against the lapping plate 702. However the skilled person will appreciate that a suitable force may be applied in other ways. In preferred embodiments a lower surface 714a of the filter element mount 714 is provided with a ceramic portion 720 extending around an inner perimeter of the mount adjacent ceramic disc 712, intended to wear in a similar manner to disc 712.

The piston 716 is connected to a micrometer screw 722 which controls the linear movement of a (non-rotating) actuator 724, connected by a mechanical coupling 726 to the piston 716. In use the micrometer screw 722 controls movement of the piston, to urge the ceramic disc 712 downwards so that it is substantially flush with the lower face 714a of the filter holder (but projecting slightly). As the lower surface of ceramic disc 712 is gradually ground away the micrometer screw is controlled to move the ceramic disc downwards for further abrasion. In some embodiments this movement may be computer controlled. Additionally or alternatively a mechanical stop 728, such as a lock nut, may be provided on the actuator 724 to define a linear distance of movement of the ceramic disc and hence an average pore size opening.

In some embodiments the pore size opening may be controlled by establishing a calibration curve between the amount (thickness) of material to be removed and the average pore size (for example average maximum or minimum dimension measured across the opening at the surface of the ceramic disc). Alternatively a simple mathematical model may be employed in which the taper of a pore is modelled as a linear taper, in which case the purported pore opening dimension may be determined by trigonometry - if θ is the angle the wall of a pore makes to a normal to the surface of the disc 712, a change in pore opening is twice (two flared walls) the abraded thickness times the tangent of angle θ. Thus for a change in filter thickness (abraded distance) *Δl,* the change in channel opening size Δ*d* may be estimated from Δ*d* = 2Δ*l* tan *θ*.

In some preferred embodiments of the apparatus 700 a pressure sensor is included to monitor and/or control the degree of applied force, and hence the rate of abrasion of the ceramic filter plate. Additionally or alternatively this or another pressure sensor may be employed to detect an operational or fault condition of the apparatus such as binding between the lapping plate and the filter plate, exhaustion of the abrasive material, or the like.

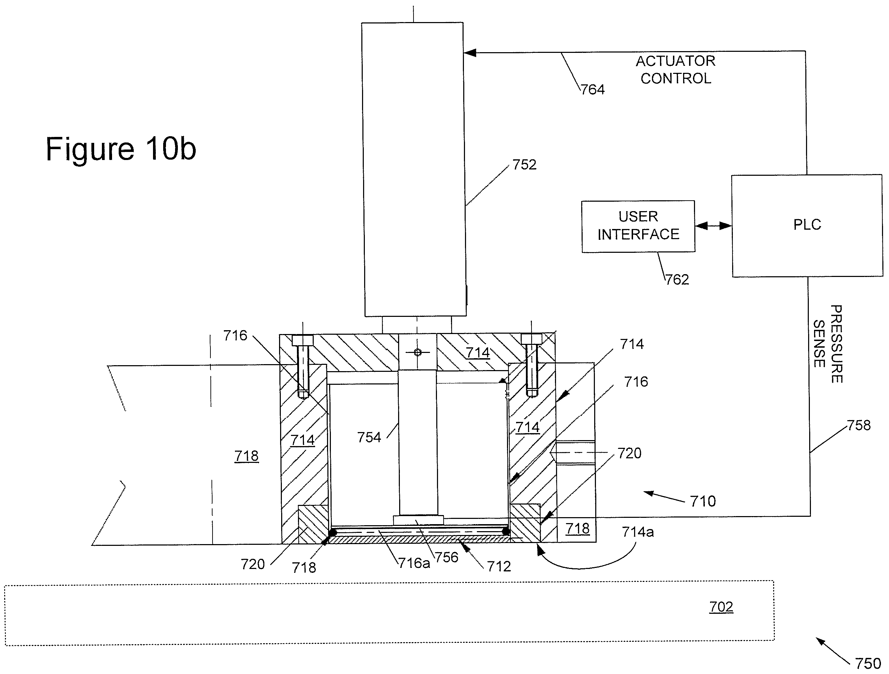

Figure 10b shows a cross-sectional view of a further embodiment of apparatus 750 for automatically controlling the filter channel opening size of a ceramic filter element. Like elements to those previously described are indicated by like reference numerals.

In apparatus 750 a linear actuator 752 controls the linear motion of an actuator 754 which bears upon a version of piston 716 via a pressure sensor 756. A pressure sensor 756 measures the force or pressure, exerted on the ceramic filter element, urging the filter element towards the lapping plate 702. The skilled person will appreciate that in other arrangements pressure sensor 756 may be located elsewhere, for example in a mount of the linear actuator on housing 714 or within the linear actuator itself.

The pressure sensor 756 provides an output 758, in embodiments a digital output, to a system controller 760 which may be a PLC (programmable logic controller). The controller 760, in embodiments, has a user interface 762, for example for setting a target average filter channel opening size and, preferably, one or more control outputs 764. In embodiments a control output 764 is provided to the linear actuator 752 to control the linear motion of the ceramic filter element downwards onto the lapping plate during the abrasion process, for example to achieve a target pressure or pressure range, for example over the duration of a target time interval corresponding to a target filter channel opening size or size range.

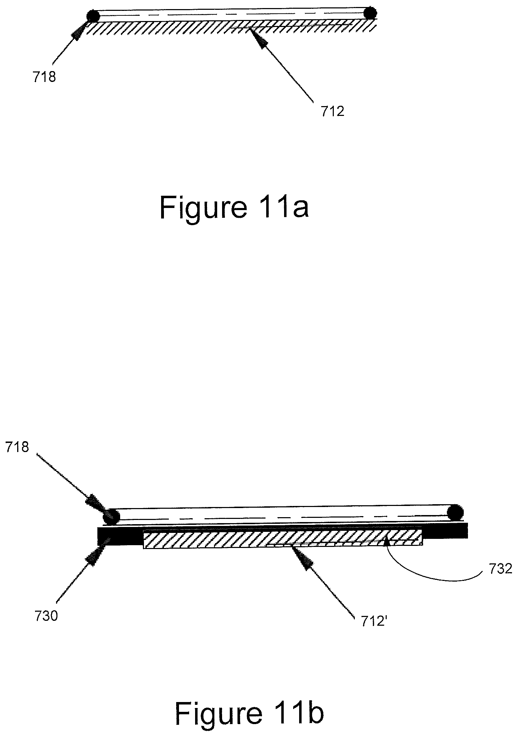

Referring next to Figure 11, Figure 11a shows an enlargement of Figure 10 in which the ceramic disc fits the filter mount. In embodiments the mount is designed for a first, standard sized disc, for example 55mm in diameter. Figure 11b shows a corresponding portion of the apparatus of Figure 10 used with a reduced size ceramic disc 712', for example of 50mm or less. In this latter case a filter holder 730 is employed, the holder 730 having dimensions matching the size of a standard ceramic disc 712 and having a recessed portion 732 for mounting the reduced size disc. In some preferred embodiments the thickness of the filter holder 730 is less than 400µm.

It is important for the apparatus 700/750 that the ceramic filter element is substantially flat. However the flared pores can cause the precursor element to warp during sintering. Preferably, therefore, a force is applied to the ceramic precursor element during sintering with a component in a direction from the apex towards the base of the flared pores, for example by weighting or clamping the precursor element during sintering. The weight or clamp should use a material which is sufficiently stiff at the sintering temperature, which may be of order 1500°C, that the precursor is maintained flat; thus another ceramic material may be employed.

## Claims

1. Apparatus (700) for controlling the filter channel opening size of a ceramic filter element (712), said ceramic filter element having flared pores, the apparatus comprising:
a lapping machine having a lapping plate (702); and
a filter holder (710) to hold a ceramic filter element for controlled lapping of said flared pores;
wherein said filter holder comprises:
a filter element mount (714) to mount the ceramic filter element to be lapped such that a surface of said ceramic filter element lies substantially flush with a lower face of said filter element mount, wherein said filter element mount comprises a piston (716) having a flat face (716a), against which the ceramic filter element (712) bears;
an adjustable actuator (724) to controllably move said surface of said ceramic filter element relative to the lower face of said filter element mount so that it remains substantially flush or projects beyond said lower face of said filter element mount during lapping, wherein the adjustable actuator controls movement of the piston;
means for urging said filter holder towards said lapping plate; and
a system controller (760) to:
sense or measure one or more parameters selected from the group consisting of: a pressure of said ceramic filter element on said lapping plate, a rotational speed of said lapping plate, and a duration of lapping of said ceramic filter element; and
provide one or more outputs to the adjustable actuator to control one or more of said parameters and control movement of the piston to urge the ceramic filter element downwards to remove a portion of the thickness of said surface of a ceramic filter element to thereby control the filter channel opening size.

2. Apparatus as claimed in claim 1 wherein the apparatus further comprises a seal (718) between said piston and said filter holder.

3. Apparatus as claimed in claim 2 wherein said actuator comprises a micrometer screw thread (722).

4. Apparatus as claimed in any one of claims 1 to 3 wherein said lower face of said filter holder includes a ceramic portion (720) extending around a perimeter of the ceramic filter element, when mounted.

5. Apparatus as claimed in any preceding claim wherein said means for urging said filter holder towards said lapping plate comprises one or more weights mounted on said filter holders.

6. Apparatus as claimed in any preceding claim further comprising movement control means, in particular a stop (728) for said actuator, to control a degree of abrasion of said ceramic filter element to control the opening size of said flared pores.

7. Apparatus as claimed in any preceding claim wherein said system controller comprises a stored model relating one more of said sensed parameters to said filter channel opening size.

8. Apparatus as claimed in claim 7 wherein said stored model comprises a mathematical model or an empirical model.

9. A method of manufacturing a ceramic filter, comprising using the apparatus (700) of any preceding claim to controllably remove a portion of the thickness of a surface of a ceramic filter element having flared pores opening onto said surface, to thereby control a channel opening size of said ceramic filter.

10. A method as claimed in claim 9 further comprising fabricating said ceramic filter element by sintering a ceramic precursor element, said precursor element having a structure comprising first and second surfaces and an arrangement of flared pores extending between said first and second surfaces, wherein an apex of a said flared pore is towards said first surface and a base of said flared pore is towards said second surface and is larger than said apex; and wherein said sintering comprises applying a force to said ceramic precursor element during said sintering, wherein said force has a component in a direction from said apex towards said base of said flared pore.

11. A method as claimed in claim 10 comprising applying said force to maintain said ceramic precursor element substantially flat during said sintering.

12. A method as claimed in claim 10 or 11 comprising applying said force using the weight of a ceramic material.

13. A method as claimed in claim 10, 11 or 12 wherein, in said ceramic precursor, said flared pore contains polymer material and regions between said flared pores comprise ceramic material; and wherein said sintering fuses said ceramic material and removes said polymer material.

14. A method as claimed in any one of claims 10 to 13 comprising fabricating said ceramic precursor element by forming a dope into a desired shape for the element, the dope comprising the ceramic material, the polymer, and a solvent for the polymer; and treating the formed shape in a bath of liquid to at least partially replace the solvent with the liquid of said bath , wherein the method optionally further comprises degassing said dope prior to forming said dope into said desired shape.

## Patentansprüche

1. Gerät (700) zum Steuern der Filterkanalöffnungsgröße eines Keramikfilterelements (712), wobei das Keramikfilterelement aufgeweitete Poren aufweist, wobei das Gerät Folgendes umfasst:
eine Läppmaschine, welche eine Läpp-Platte (702) aufweist; und
einen Filterhalter (710) zum Halten eines Keramikfilterelements zum gesteuerten Läppen der aufgeweiteten Poren;
wobei der Filterhalter Folgendes umfasst:
eine Filterelementhalterung (714) zum Montieren des zu läppenden Keramikfilterelements in einer Weise, dass eine Oberfläche des Keramikfilterelements im Wesentlichen bündig an einer unteren Seite der Filterelementhalterung anliegt, wobei die Filterelementhalterung einen Kolben (716) umfasst, welcher eine flache Seite (716a) aufweist, an welcher das Keramikfilterelement (712) anliegt;
ein einstellbares Stellglied (724) zum steuerbaren Bewegen der Oberfläche des Keramikfilterelements in Bezug auf die untere Seite der Filterelementhalterung in der Weise, dass es im Wesentlichen bündig bleibt oder über die untere Seite der Filterelementhalterung während des Läppens hinaus vorspringt, wobei das einstellbare Stellglied eine Bewegung des Kolbens steuert;
ein Mittel zum Drängen des Filterhalters in Richtung der Läpp-Platte; und
eine Systemsteuerung (760) zum:
Erfassen oder Messen eines oder mehrerer Parameter, ausgewählt aus der Gruppe bestehend aus: einem Druck des Keramikfilterelements auf die Läpp-Platte, einer Drehzahl der Läpp-Platte, und einer Läppdauer des Keramikfilterelements; und
Bereitstellen einer oder mehrerer Ausgaben an das einstellbare Stellglied zum Steuern eines oder mehrerer der Parameter und Steuern einer Bewegung des Kolbens zum Drängen des Keramikfilterelements nach unten, um einen Abschnitt der Dicke der Oberfläche eines Keramikfilterelements zu entfernen, um dadurch die Filterkanalöffnungsgröße zu steuern.

2. Gerät nach Anspruch 1, wobei das Gerät ferner eine Dichtung (718) zwischen dem Kolben und dem Filterhalter umfasst.

3. Gerät nach Anspruch 2, wobei das Stellglied ein Mikrometerschraubengewinde (722) umfasst.

4. Gerät nach einem der Ansprüche 1 bis 3, wobei die untere Seite des Filterhalters einen Keramikabschnitt (720) einschließt, welcher sich, wenn er montiert ist, um einen Umfang des Keramikfilterelements erstreckt.

5. Gerät nach einem der vorhergehenden Ansprüche, wobei das Mittel zum Drängen des Filterhalters in Richtung der Läpp-Platte ein oder mehrere Gewichte umfasst, welche an den Filterhaltern montiert sind.

6. Gerät nach einem der vorhergehenden Ansprüche, ferner umfassend ein Mittel zum Steuern einer Bewegung, insbesondere einen Stopper (728) für das Stellglied, um einen Abriebgrad des Keramikfilterelements zu steuern, um die Öffnungsgröße der aufgeweiteten Poren zu steuern.

7. Gerät nach einem der vorhergehenden Ansprüche, wobei die Systemsteuerung ein gespeichertes Modell umfasst, welche einen oder mehrere erfasste Parameter mit der Filterkanalöffnungsgröße in Beziehung setzt.

8. Gerät nach Anspruch 7, wobei das gespeicherte Modell ein mathematisches Modell oder ein empirisches Modell umfasst.

9. Verfahren zur Herstellung eines Keramikfilters, umfassend Verwenden des Geräts (700) nach einem der vorhergehenden Ansprüche zum steuerbaren Entfernen eines Abschnitts der Dicke einer Oberfläche eines Keramikfilterelements, welches aufgeweitete Poren aufweist, welche sich auf die Oberfläche öffnen, um hierdurch eine Kanalöffnungsgröße des Keramikfilters zu steuern.

10. Verfahren nach Anspruch 9, ferner umfassend Herstellen des Keramikfilterelements durch Sintern eines Keramik-Vorläuferelements, wobei das Vorläuferelement eine Struktur aufweist, welche eine erste und eine zweite Oberfläche und eine Anordnung von aufgeweiteten Poren umfasst, welche sich zwischen der ersten und der zweiten Oberfläche erstreckt, wobei eine Spitze der aufgeweiteten Pore in Richtung der ersten Oberfläche gerichtet ist und eine Basis der aufgeweiteten Pore in Richtung der zweiten Oberfläche gerichtet ist und größer als die Spitze ist; und wobei das Sintern Aufbringen einer Kraft auf das Keramik-Vorläuferelement während des Sinterns umfasst, wobei die Kraft eine Komponente in einer Richtung von der Spitze in Richtung der Basis der aufgeweiteten Pore aufweist.

11. Verfahren nach Anspruch 10, umfassend Aufbringen der Kraft, um das Keramik-Vorläuferelement während des Sinterns im Wesentlichen flach zu halten.

12. Verfahren nach Anspruch 10 oder 11, umfassend Aufbringen der Kraft unter Verwendung des Gewichts eines Keramikmaterials.

13. Verfahren nach Anspruch 10, 11 oder 12, wobei, in dem Keramik-Vorläufer, die aufgeweitete Pore Polymermaterial enthält und Bereiche zwischen den aufgeweiteten Poren Keramikmaterial umfassen; und wobei das Sintern das Keramikmaterial verschmelzt und das Polymermaterial entfernt.

14. Verfahren nach einem der Ansprüche 10 bis 13, umfassend Herstellen des Keramik-Vorläuferelements durch Bilden eines Dotierungsmittels zu einer gewünschten Form für das Element, wobei das Dotierungsmittel das Keramikmaterial, das Polymer und ein Lösemittel für das Polymer umfasst; und Behandeln der gebildeten Form in einem Flüssigkeitsbad, um mindestens teilweise das Lösemittel mit der Flüssigkeit des Bades zu ersetzen, wobei das Verfahren optionsweise ferner Entgasen des Dotierungsmittels vor dem Bilden des Dotierungsmittels zu der gewünschten Form umfasst.

## Revendications

1. Appareil (700) pour commander la dimension d'ouverture de canal de filtre d'un élément de filtre en céramique (712), ledit élément de filtre en céramique comportant des pores évasés, l'appareil comprenant :
une machine de rodage qui comporte une plaque de rodage (702) ; et
un moyen de support de filtre (710) pour supporter un élément de filtre en céramique pour le rodage commandé desdits pores évasés ;
dans lequel ledit moyen de support de filtre comprend :
un moyen de montage d'élément de filtre (714) pour monter l'élément de filtre en céramique à rôder de telle sorte qu'une surface dudit élément de filtre en céramique affleure sensiblement une face inférieure dudit moyen de montage d'élément de filtre, dans lequel ledit moyen de montage d'élément de filtre comprend un piston (716) qui comporte une face plane (716a) contre laquelle l'élément de filtre en céramique (712) est appuyé ;
un actionneur réglable (724) pour déplacer de manière commandée ladite surface dudit élément de filtre en céramique par rapport à la face inférieure dudit moyen de montage d'élément de filtre de telle sorte qu'elle affleure sensiblement ladite face inférieure dudit moyen de montage d'élément de filtre ou qu'elle soit en projection au-delà de cette même dite face inférieure pendant le rodage, dans lequel l'actionneur réglable commande le déplacement du piston ;
un moyen pour pousser ledit moyen de support de filtre en direction de ladite plaque de rodage ; et
un contrôleur système (760) pour :
détecter ou mesurer un ou plusieurs paramètres qui sont sélectionnés parmi le groupe qui est constitué par : une pression dudit élément de filtre en céramique sur ladite plaque de rodage, une vitesse de rotation de ladite plaque de rodage et une durée de rodage dudit élément de filtre en céramique ; et pour
fournir une ou plusieurs sorties à l'actionneur réglable pour commander un ou plusieurs desdits paramètres et pour commander le déplacement du piston pour pousser l'élément de filtre en céramique vers le bas pour enlever une partie de l'épaisseur de ladite surface d'un élément de filtre en céramique pour ainsi commander la dimension d'ouverture de canal de filtre.

2. Appareil selon la revendication 1, dans lequel l'appareil comprend en outre un moyen d'étanchéité (718) entre ledit piston et ledit moyen de support de filtre.

3. Appareil selon la revendication 2, dans lequel ledit actionneur comprend un filetage de vis micrométrique (722).

4. Appareil selon l'une quelconque des revendications 1 à 3, dans lequel ladite face inférieure dudit moyen de support de filtre inclut une partie en céramique (720) qui, lorsqu'elle est montée, s'étend autour d'un périmètre de l'élément de filtre en céramique.

5. Appareil selon l'une quelconque des revendications précédentes, dans lequel ledit moyen pour pousser ledit moyen de support de filtre en direction de ladite plaque de rodage comprend un ou plusieurs poids qui sont montés sur ledit moyen de support de filtre.

6. Appareil selon l'une quelconque des revendications précédentes, comprenant en outre un moyen de commande de déplacement, en particulier un moyen d'arrêt (728) pour ledit actionneur, pour commander un degré d'abrasion dudit élément de filtre en céramique pour commander la dimension d'ouverture desdits pores évasés.

7. Appareil selon l'une quelconque des revendications précédentes, dans lequel ledit contrôleur système comprend un modèle stocké qui met en relation un ou plusieurs desdits paramètres détectés avec ladite dimension d'ouverture de canal de filtre.

8. Appareil selon la revendication 7, dans lequel ledit modèle stocké comprend un modèle mathématique ou un modèle empirique.

9. Procédé de fabrication d'un filtre en céramique, comprenant l'utilisation de l'appareil (700) selon l'une quelconque des revendications précédentes pour enlever de manière commandée une partie de l'épaisseur d'une surface d'un élément de filtre en céramique qui comporte des pores évasés s'ouvrant sur ladite surface, pour ainsi commander une dimension d'ouverture de canal dudit filtre en céramique.

10. Procédé selon la revendication 9, comprenant en outre la fabrication dudit élément de filtre en céramique par frittage d'un élément précurseur de céramique, ledit élément précurseur comportant une structure qui comprend des première et seconde surfaces et un agencement de pores évasés qui s'étend entre lesdites première et seconde surfaces, dans lequel un apex duditpore évasé est dirigé vers ladite première surface et une base dudit pore évasé est dirigée vers ladite seconde surface et est plus grande que ledit apex ; et dans lequel ledit frittage comprend l'application d'une force sur ledit élément précurseur de céramique pendant ledit frittage, dans lequel ladite force présente une composante dans une direction depuis ledit apex en direction de ladite base dudit pore évasé.

11. Procédé selon la revendication 10, comprenant l'application de ladite force pour maintenir ledit élément précurseur de céramique sensiblement à plat pendant ledit frittage.

12. Procédé selon la revendication 10 ou 11, comprenant l'application de ladite force en utilisant le poids d'un matériau de céramique.

13. Procédé selon la revendication 10, 11 ou 12, dans lequel, dans ledit précurseur de céramique, ledit pore évasé contient un matériau de polymère et des régions entre lesdits pores évasés comprennent du matériau de céramique ; et dans lequel ledit frittage fond ledit matériau de céramique et enlève ledit matériau de polymère.

14. Procédé selon l'une quelconque des revendications 10 à 13, comprenant la fabrication dudit élément précurseur de céramique en formant un dopant selon une forme souhaitée pour l'élément, le dopant comprenant le matériau de céramique, le polymère et un solvant pour le polymère ; et le traitement de la forme conformée dans un bain de liquide pour au moins partiellement remplacer le solvant par le liquide dudit bain, dans lequel le procédé comprend en outre en option le dégazage dudit dopant avant la formation de ladite pâte en ladite forme souhaitée.
